(19)

Europäisches
Patentamt
European
Patent Office
Office européen
des brevets

(11) **EP 3 604 116 A1**

(12) **EUROPEAN PATENT APPLICATION**
published in accordance with Art. 153(4) EPC

(43) Date of publication:
**05.02.2020 Bulletin 2020/06**

(21) Application number: **18772249.1**

(22) Date of filing: **23.03.2018**

(51) Int Cl.:
**B63H 21/32** *(2006.01)*　　　**B63H 21/14** *(2006.01)*

(86) International application number:
**PCT/JP2018/011925**

(87) International publication number:
**WO 2018/174291 (27.09.2018 Gazette 2018/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.03.2017　JP 2017059343**

(71) Applicants:
- **Mitsubishi Shipbuilding Co., Ltd.**
  **Yokohama-shi**
  **Kanagawa 220-8401 (JP)**
- **Mitsubishi Hitachi Power Systems, Ltd.**
  **Yokohama-shi, Kanagawa 220-8401 (JP)**

(72) Inventors:
- **KANEKO, Takeshi**
  **Tokyo 108-8215 (JP)**
- **KAMIYAMA, Naoyuki**
  **Tokyo 108-8215 (JP)**
- **YOSHIMOTO, Takashi**
  **Tokyo 108-8215 (JP)**
- **WATANABE, Yusuke**
  **Tokyo 108-8215 (JP)**
- **USHIKU, Tetsu**
  **Yokohama-shi**
  **Kanagawa 220-8401 (JP)**
- **TAKEUCHI, Yasuhiro**
  **Yokohama-shi**
  **Kanagawa 220-8401 (JP)**
- **SASAKI, Ryozo**
  **Yokohama-shi**
  **Kanagawa 220-8401 (JP)**

(74) Representative: **Henkel & Partner mbB**
**Patentanwaltskanzlei, Rechtsanwaltskanzlei**
**Maximiliansplatz 21**
**80333 München (DE)**

(54) **DRAINAGE SYSTEM OF MARINE DESULFURIZATION DEVICE**

(57)　This drainage system for a marine desulfurization device is provided with a desulfurization column and a drainage line. The drainage line has: an inflow port which is positioned above the waterline of a ship and through which liquid accumulated in a liquid reservoir part flows in as waste liquid; and a discharge port which is positioned below the waterline and through which the liquid flowing in from the inflow port is discharged to the outside of the ship. The drainage system for a marine desulfurization device is configured such that of the liquid accumulated in the liquid reservoir part, the liquid above the height of a weir part which is positioned above the waterline overflows out of the weir part and flows into the inflow port.

FIG. 1

## Description

TECHNICAL FIELD

The present disclosure relates to a drainage system for a marine desulfurization device.

BACKGROUND ART

In recent years, the International Maritime Organization (IMO) has adopted new regulations for pH of wastewater from desulfurization devices mounted on ships. At the present time, the pH is restricted to be no less than 6.5 at 4 m from the overboard discharge point.
Patent Document 1 discloses a desulfurization device mounted on a ship, in which a water-saving deacidification device is connected with a total drain pipe to discharge post-deacidification seawater that is suitable for discharge regulation.

Citation List

Patent Literature

Patent Document 1: JP2011-524800A (translation of a PCT application)

SUMMARY

Problems to be Solved

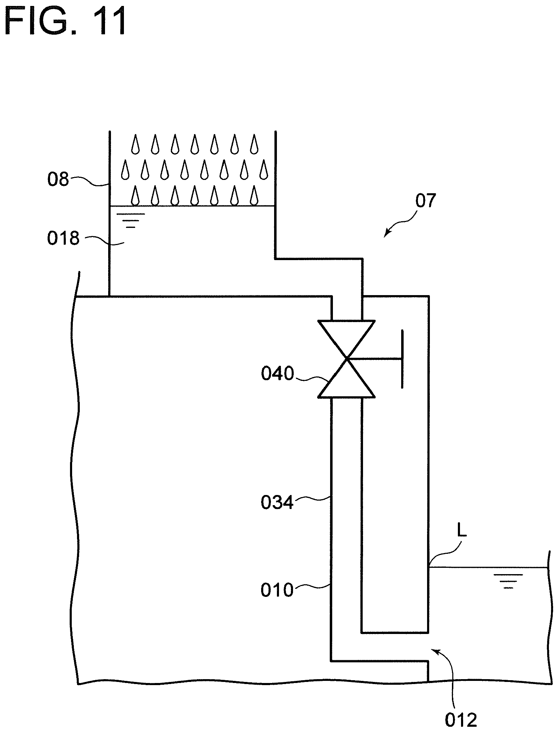

In a case where a desulfurization tower is mounted on the deck or the like of a ship, the liquid level of a liquid reservoir in the bottom of the desulfurization tower is situated above the waterline. In this case, a configuration shown in FIG. 11 is considered as a drainage system for the desulfurization device.
In the drainage system 07 shown in FIG. 11, an outlet 012 for discharging wastewater of a desulfurization tower 08 to the outside of the ship is disposed below the waterline L (in the sea), and a liquid in a liquid reservoir 018 of the desulfurization tower 08 is discharged from the outlet 012 via a drainage line 010 including a pipe 034 extending in the vertical direction. In case of this drainage system 07, a valve 040 is disposed in the middle of the pipe 034 so that the liquid reservoir 018 of the desulfurization tower 08 does not become empty. Thus, the valve 040 enables adjustment of the flow rate of wastewater flowing from the liquid reservoir 018 into the sea. Thereby, it is possible to prevent inflow of exhaust gas into the drainage line. Further, it is possible to reliably prevent emission of exhaust gas into the atmosphere.
However, the drainage system 07 shown in FIG. 11 causes, in a case where the opening degree of the valve 040 is decreased to reduce the drainage amount from the desulfurization tower 08, large negative pressure downstream of the valve 040 in the drainage line 010, which can cause damage to the pipe 034 or boiling of internal fluid under reduced pressure. Further, even if the valve 040 is opened to avoid the occurrence of negative pressure, there is a possibility that the liquid reservoir 018 of the desulfurization tower 08 becomes empty and exhaust gas flows into the drainage line 010, resulting in thermal damage to the pipe 034.
In this regard, Patent Document 1 does not disclose any measure for suppressing damage to pipes in a drainage system for a marine desulfurization device.
At least one embodiment of the present invention was made in view of the above typical problem, and an object thereof is to provide a drainage system for a marine desulfurization device whereby it is possible to reduce damage to pipes of a drainage line through which wastewater from a desulfurization tower is discharged to the outside of the ship.

Solution to the Problems

(1) According to at least one embodiment of the present invention, a drainage system for a marine desulfurization device for desulfurizing an exhaust gas discharged from an exhaust gas generation device mounted on a ship comprises: a desulfurization tower defining therein a gas-liquid contact part spraying a cleaning liquid to the exhaust gas introduced into the gas-liquid contact part to bring the exhaust gas and the cleaning liquid into gas-liquid contact; and a drainage line having an inlet and an outlet, the inlet being positioned above a waterline of the ship and being configured so that a liquid stored in a liquid reservoir and including the cleaning liquid sprayed to the exhaust gas flows into the inlet as wastewater, the outlet being positioned below the waterline and discharging the liquid flowing from the inlet to an outside of the ship. The drainage system is configured so that the liquid that is stored in the liquid reservoir and exceeds a height of a weir part disposed above the waterline overflows the weir part and flows into the inlet.
With the drainage system for a marine desulfurization device described in the above (1), using the gravity and the height difference between the liquid level position of the wastewater in the drainage line and the height position of the waterline, it is possible to supply the wastewater to the outlet by the hydraulic head of the wastewater in the drainage line. Further, since the wastewater flows into the inlet from the liquid reservoir by the overflow method as described above, a liquid stored in the liquid reservoir and a liquid accumulated in the drainage line are separated spatially, and the amount of the liquid stored in the liquid reservoir does not directly affect the pressure of the liquid in the drainage line. Thus, it is possible to suppress the increase in pressure applied to pipes forming the drainage line.

Further, since it is not necessary to provide a valve to the drainage line above the waterline, the above problems raised in the configuration shown in FIG. 11 (damage to pipes or boiling of internal fluid under reduced pressure due to negative pressure occurring downstream of the valve) do not occur, and thus it is possible to reduce damage to pipes of the drainage line. Accordingly, it is possible to decrease the design strength of pipes forming the drainage line, and it is possible to reduce the cost and the weight of the pipes.

(2) In some embodiments, in the drainage system for a marine desulfurization device described in the above (1), the desulfurization tower further defines therein the liquid reservoir positioned below the gas-liquid contact part.

With the drainage system for a marine desulfurization device described in the above (2), a liquid can be stored in the liquid reservoir disposed inside the desulfurization tower.

(3) In some embodiments, in the drainage system for a marine desulfurization device described in the above (2), the desulfurization tower further defines therein a connection space part connected to the drainage line, the weir part is disposed on the connection space part, the desulfurization tower includes a partition member separating the connection space part from the gas-liquid contact part, and a lower end of the partition member is positioned below an upper end of the weir part.

With the drainage system for a marine desulfurization device described in the above (3), since the lower end of the partition member is positioned below the upper end of the weir part, a liquid can be stored to a position above the lower end of the partition member in the liquid reservoir. Thereby, it is possible to suppress inflow of the gas in the gas-liquid contact part of the desulfurization tower into the connection space part by the liquid stored in the liquid reservoir and the partition member. Consequently, it is possible to suppress inflow of the gas in the gas-liquid contact part of the desulfurization tower into the drainage line, and it is possible to reduce damage to pipes forming the drainage line.

(4) In some embodiments, in the drainage system for a marine desulfurization device described in the above (3), the desulfurization tower is provided with an atmospheric opening connecting the connection space part to atmosphere.

With the drainage system for a marine desulfurization device described in the above (4), the pressure in the connection space part is kept at atmospheric pressure through the atmospheric opening, which makes it possible to avoid the occurrence of a phenomenon that a liquid stored in the liquid reservoir of the desulfurization tower is sucked out to the drainage line by the siphon effect. Further, since the connection space part and the gas-liquid contact part are separated by the partition member, it is possible to prevent the gas in the gas-liquid contact part from flowing out to the atmosphere through the atmospheric opening.

(5) In some embodiments, in the drainage system for a marine desulfurization device described in the above (3) or (4), the desulfurization tower includes a traverse member connecting an opposed pair of wall surfaces of the desulfurization tower and traversing the liquid reservoir.

With the drainage system for a marine desulfurization device described in the above (5), it is possible to suppress sloshing in a direction intersecting with the extension direction of the traverse member in the liquid reservoir by the traverse member. The sloshing suppression effect by the traverse member can be obtained regardless of the configuration of the drainage line.

(6) In some embodiments, in the drainage system for a marine desulfurization device described in the above (5), the traverse member extends along an extension direction of the partition member.

With the drainage system for a marine desulfurization device described in the above (6), it is possible to effectively suppress sloshing in a direction perpendicular to the extension direction of the partition member by the traverse member. Thus, it is possible to suppress the flow of the gas in the gas-liquid contact part passing below the partition member and flowing into the connection space part.

(7) In some embodiments, in the drainage system for a marine desulfurization device described in the above (6), an upper end of the traverse member is positioned above the upper end of the weir part, a lower end of the traverse member is positioned below the upper end of the weir part, and a clearance is provided between the lower end of the traverse member and a bottom surface of the desulfurization tower.

With the drainage system for a marine desulfurization device described in the above (7), it is possible to effectively suppress sloshing in a direction intersecting with the extension direction of the traverse member in the liquid reservoir by the traverse member while the liquid level on both sides of the traverse member in the liquid reservoir is made uniform.

(8) In some embodiments, in the drainage system for a marine desulfurization device described in any of the above (3) to (7), when a direction in which the gas-liquid contact part and the connection space part are adjacent is defined as a first direction; a side adjacent to the gas-liquid contact part in the first direction is defined as a first side; a side adjacent to the connection space part in the first direction is defined as a second side; L is a length of the liquid reservoir along the first direction; L1 is a length of the liquid reservoir between the partition member and an end of the liquid reservoir on the first side in the first direction; L2 is a length of the liquid reservoir between the partition member and the weir part; and D is a difference between a height of the weir part and a height of a lower end of the partition member, the following expression (A) is satisfied:

$$D > \max\{L1, L2\} \times \tan\theta \qquad (A)$$

wherein θ is 22.5 degrees in a case where the first direction coincides with a width direction of the ship, and θ is 15 degrees in a case where the first direction coincides with a front-back direction of the ship.

A typical ship is designed in consideration of rolling (swing in the roll direction) of the ship about 22.5 degrees, and pitching (swing in the pitch direction) of the ship about 15 degrees. In this regard, with the drainage system for a marine desulfurization device described in the above (8), since the above expression (A) is satisfied, even in a case where the ship rolls or pitches as expected, it is possible to suppress the flow of the gas in the gas-liquid contact part passing below the partition member and flowing into the connection space part.

(9) In some embodiments, in the drainage system for a marine desulfurization device described in the above (1), the drainage system further comprises a relay tank disposed outside the desulfurization tower and defining therein the liquid reservoir.

With the drainage system for a marine desulfurization device described in the above (9), a liquid can be stored in the liquid reservoir of the relay tank disposed outside the desulfurization tower. Further, since the liquid reservoir is provided in the relay tank which is positioned outside the desulfurization tower and can be changed in layout more easily than the desulfurization tower, it is possible to improve the layout of the desulfurization tower, compared with a case where the liquid reservoir is provided in the desulfurization tower.

(10) In some embodiments, in the drainage system for a marine desulfurization device described in the above (9), the relay tank further defines therein a connection space part connected to the drainage line, and the weir part is disposed on the connection space part.

With the drainage system for a marine desulfurization device described in the above (10), since the connection space part connected to the drainage line is provided in the relay tank which is positioned outside the desulfurization tower and can be changed in layout more easily than the desulfurization tower, it is possible to improve the layout of the desulfurization tower and the drainage line.

(11) In some embodiments, in the drainage system for a marine desulfurization device described in the above (10), the relay tank is provided with an atmospheric opening connecting the connection space part to atmosphere.

With the drainage system for a marine desulfurization device described in the above (11), the pressure in the connection space part is kept at atmospheric pressure through the atmospheric opening, which makes it possible to avoid the occurrence of a phenomenon that a liquid stored in the liquid reservoir of the relay tank is sucked out to the drainage line by the siphon effect.

(12) In some embodiments, in the drainage system for a marine desulfurization device described in any of the above (1) to (11), the drainage system further comprises a liquid level meter for measuring a liquid level position of the wastewater in the drainage line; a liquid-level-position adjustment valve disposed below the waterline in the drainage line; and a valve controller controlling an opening degree of the liquid-level-position adjustment valve, based on the liquid level position measured by the liquid level meter.

With the drainage system for a marine desulfurization device described in the above (12), by controlling the opening degree of the liquid-level-position adjustment valve so that the liquid level position of the wastewater in the drainage line measured by the liquid level meter is kept in a predetermined range, it is possible to suppress the excess or deficiency of hydraulic head of the wastewater (power of wastewater in the drainage line) due to load fluctuation in the head pipe of the drainage line. Thus, it is possible to discharge the wastewater from the outlet appropriately with reduced damage to pipes forming the drainage line.

(13) In some embodiments, in the drainage system for a marine desulfurization device described in any of the above (1) to (12), the drainage system further comprises a nozzle for mixing the liquid including the cleaning liquid discharged from the outlet with water around the ship.

With the drainage system for a marine desulfurization device described in the above (13), using the gravity and the height difference between the liquid level position of the wastewater accumulated in the drainage line and the height position of the waterline, it is possible to supply the wastewater to the nozzle by the hydraulic head of the wastewater in the drainage line. Thereby, it is possible to effectively mix the wastewater discharged from the nozzle with water around the ship.

(14) In some embodiments, in the drainage system for a marine desulfurization device described in any of the above (1) to (13), the drainage system further comprises an overflow pipe connecting a predetermined position of the drainage line above the waterline to the outside of the ship.

With the drainage system for a marine desulfurization device described in the above (14), even if the flow rate of the wastewater flowing into the drainage line suddenly increases due to some troubles, and the liquid level position of the wastewater in the drainage line rises, the wastewater is discharged from the overflow pipe to the outside of the ship. Thus, it is possible to suppress backflow of the wastewater from the drainage line to the desulfurization tower and to the exhaust gas generation device.

(15) In some embodiments, in the drainage system for a marine desulfurization device described in any of the above (1) to (14), the drainage system further comprises a fluid injection device for injecting a fluid into the drainage line.

With the drainage system for a marine desulfurization device described in the above (15), injecting a liquid such as hypochlorous acid into the drainage line by the fluid injection device prevents adhesion of marine growth to the inside of the drainage line. Further, injecting an alkaline liquid into the drainage line by the fluid injection device increases the pH of the wastewater in the drainage line.

Advantageous Effects

According to at least one embodiment of the present invention, there is provided a drainage system for a marine desulfurization device whereby it is possible to reduce damage to pipes of a drainage line through which wastewater from a desulfurization tower is discharged to the outside of the ship.

BRIEF DESCRIPTION OF DRAWINGS

FIG. 1 is a cross-sectional view showing a schematic configuration of a drainage system 7(7A) of a desulfurization device 6 according to an embodiment.
FIG. 2 is a schematic cross-sectional view for describing the dimension of a part of the desulfurization device 6 shown in FIG. 1.
FIG. 3 is a cross-sectional view showing a schematic configuration of a drainage system 7(7B) of a desulfurization device 6 according to an embodiment.
FIG. 4 is a cross-sectional view showing a schematic configuration of a drainage system 7(7C) of a desulfurization device 6 according to an embodiment.
FIG. 5 is a cross-sectional view showing a schematic configuration of a drainage system 7(7D) of a desulfurization device 6 according to an embodiment.
FIG. 6 is a cross-sectional view showing a schematic configuration of a drainage system 7(7E) of a desulfurization device 6 according to an embodiment.
FIG. 7A is a schematic cross-sectional view for describing the configuration of a traverse member 56.
FIG. 7B is a schematic diagram for describing the arrangement of the traverse member 56 in plan view.
FIG. 8 is a cross-sectional view showing a schematic configuration of a drainage system 7(7F) of a desulfurization device 6 according to an embodiment.
FIG. 9A is a schematic diagram showing an example of a planar shape of a relay tank 70 shown in FIG. 8.
FIG. 9B is a schematic diagram showing another example of a planar shape of the relay tank 70 shown in FIG. 8.
FIG. 10A is a schematic cross-sectional view for describing the configuration of a traverse member 94.
FIG. 10B is a schematic diagram for describing the arrangement of the traverse member 94 in plan view.
FIG. 11 is a cross-sectional view showing a schematic configuration of a drainage system 07 of a desulfurization device according to a comparative embodiment.

DETAILED DESCRIPTION

Embodiments of the present invention will now be described in detail with reference to the accompanying drawings. It is intended, however, that unless particularly identified, dimensions, materials, shapes, relative positions and the like of components described in the embodiments shall be interpreted as illustrative only and not intended to limit the scope of the present invention.
For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.
For instance, an expression of an equal state such as "same" "equal" and "uniform" shall not be construed as indicating only the state in which the feature is strictly equal, but also includes a state in which there is a tolerance or a difference that can still achieve the same function.
Further, for instance, an expression of a shape such as a rectangular shape or a cylindrical shape shall not be construed as only the geometrically strict shape, but also includes a shape with unevenness or chamfered corners within the range in which the same effect can be achieved.
On the other hand, an expression such as "comprise", "include", "have", "contain" and "constitute" are not intended to be exclusive of other components.

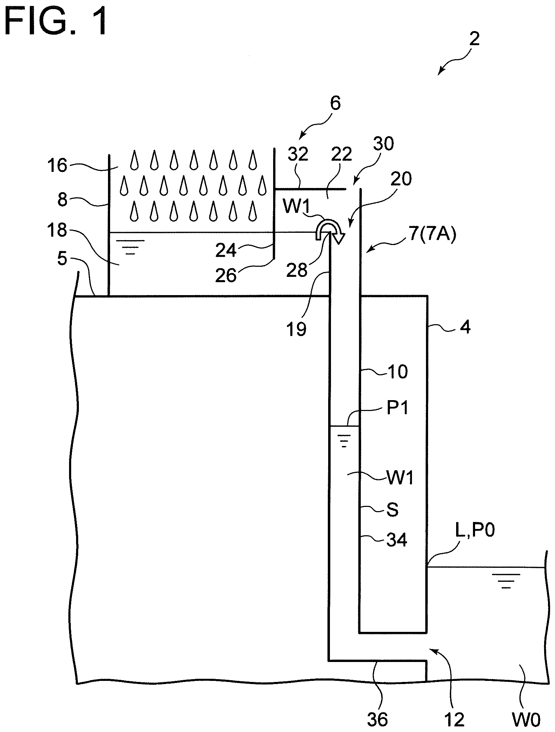

FIG. 1 is a schematic cross-sectional view of a ship 2 according to an embodiment.
As shown in FIG. 1, the ship 2 includes a hull 4 and a desulfurization device 6 (marine desulfurization device).
The desulfurization device 6 is configured to desulfurize an exhaust gas discharged from an exhaust gas generation device (not shown) mounted on the hull 4 and includes a drainage system 7(7A) for discharging wastewater generated by desulfurization treatment in the desulfurization device 6 to the outside of the ship 2. Examples of the exhaust gas generation device include main engines using C heavy oil or a mixed oil of low sulfur fuel and C heavy oil, such as a diesel engine, a gas turbine engine, or a steam turbine engine, multiple power generation engines, and marine boilers.

The drainage system 7 of the desulfurization device 6 includes a desulfurization tower 8 and a drainage line 10.

The desulfurization tower 8 is disposed on a deck 5 of the hull 4. The desulfurization tower 8 defines therein a gas-liquid contact part 16 spraying a cleaning liquid (e.g., seawater, alkaline agent) to the exhaust gas introduced into the gas-liquid contact part 16 to bring the exhaust gas and the cleaning liquid into gas-liquid contact, and a liquid reservoir 18 disposed below the gas-liquid contact part 16 and receiving a liquid including the cleaning liquid which absorbs sulfur contents in the exhaust gas at the gas-liquid contact part 16. Examples of the alkaline agent include NaOH, $Ca(OH)_2$, $NaHCO_3$, $Na_2CO_3$, and it is preferable to use an alkali reduced in volume to increase concentration.

The drainage line 10 includes an inlet 20 and an outlet 12.

The inlet 20 is disposed above the waterline L of the ship 2 and is configured so that a liquid stored in the liquid reservoir 18 flows into the inlet 20 as wastewater W1. In the illustrated embodiment, when the liquid level (liquid surface height) of the liquid reservoir 18 exceeds the height of a weir part 19 (an upper end portion of a head pipe 34 of the drainage line 10 described later) disposed above the waterline L, the liquid stored in the liquid reservoir 18 overflows the weir part 19 and flows into the inlet 20 as wastewater W1.

The outlet 12 is disposed below the waterline L and is configured to discharge the wastewater W1 flowing from the inlet 20 to the outside of the ship 2. Further, when the wastewater W1 is accumulated in the drainage line 10 and reaches a liquid level position PI above the waterline L, the drainage line 10 includes a section S (pipe) that is not open to the atmosphere over a range between the outlet 12 and the liquid level position PI of the wastewater W1 in the drainage line 10. That is, in the section S, the drainage line 10 is not connected to a facility, such as a wastewater treatment tank, that is open to the atmosphere.

In the exemplary embodiment shown in FIG. 1, the drainage line 10 includes a head pipe 34 extending along the vertical direction and having a height (head) between an upper end portion and a lower end portion, and a horizontal pipe 36 extending along the horizontal direction from the lower end portion of the head pipe 34. The inlet 20 is disposed at the upper end of the head pipe 34, and the outlet 12 is disposed on the rear end of the horizontal pipe 36 (side surface of the hull 4).

With the above configuration, using the gravity and the height difference between the liquid level position P1 of the wastewater W1 accumulated in the drainage line 10 and the height position P0 of the waterline L, it is possible to supply the wastewater W1 to the outlet 12 by the hydraulic head of the wastewater W1 in the drainage line 10. Further, since the wastewater W1 flows into the inlet 20 from the liquid reservoir 18 by the overflow method as described above, a liquid stored in the liquid reservoir 18 and a liquid accumulated in the drainage line 10 are separated spatially, and the amount of the liquid stored in the liquid reservoir 18 does not directly affect the pressure of the liquid in the drainage line 10. Thus, it is possible to suppress the increase in pressure applied to pipes forming the drainage line 10.

Further, in the illustrated embodiment, since the drainage line 10 is not provided with a valve above the waterline L, the above problems raised in the configuration shown in FIG. 11 (damage to pipes or boiling of internal fluid under reduced pressure due to negative pressure occurring downstream of the valve) do not occur, and thus it is possible to reduce damage to pipes of the drainage line 10. Accordingly, it is possible to decrease the design strength of pipes forming the drainage line 10, and it is possible to reduce the cost and the weight of the pipes.

In some embodiments, for instance as shown in FIG. 1, the desulfurization tower 8 defines therein a connection space part 22 connected to the drainage line 10, and includes a partition member 24 separating the connection space part 22 from the gas-liquid contact part 16. Additionally, the weir part 19 is disposed on the connection space part 22, and a lower end 26 of the partition member 24 is positioned below an upper end 28 of the weir part 19.

With the above configuration, since the lower end 26 of the partition member 24 is positioned below the upper end 28 of the weir part 19, a liquid can be stored to a position above the lower end 26 of the partition member 24 in the liquid reservoir 18. Thereby, it is possible to suppress inflow of the gas in the gas-liquid contact part 16 of the desulfurization tower 8 into the connection space part 22 by the liquid stored in the liquid reservoir 18 and the partition member 24. Consequently, it is possible to suppress inflow of the gas in the gas-liquid contact part 16 of the desulfurization tower 8 into the drainage line 10, and it is possible to reduce damage to pipes forming the drainage line 10.

In some embodiments, for instance as shown in FIG. 1, the desulfurization tower 8 is provided with an atmospheric opening 30 connecting the connection space part 22 to the atmosphere. In the illustrated embodiment, the atmospheric opening 30 is formed in a ceiling part 32 which defines the connection space part 22 of the desulfurization tower 8.

With the above configuration, the pressure in the connection space part 22 is kept at atmospheric pressure through the atmospheric opening 30, which makes it possible to avoid the occurrence of a phenomenon that a liquid stored in the liquid reservoir 18 of the desulfurization tower 8 is sucked out to the drainage line 10 by the siphon effect. Further, since the connection space part 22 and the gas-liquid contact part 16 are separated by the partition member 24, it is possible to prevent the gas in the gas-liquid contact part 16 from flowing out to the atmosphere through the atmospheric opening 30.

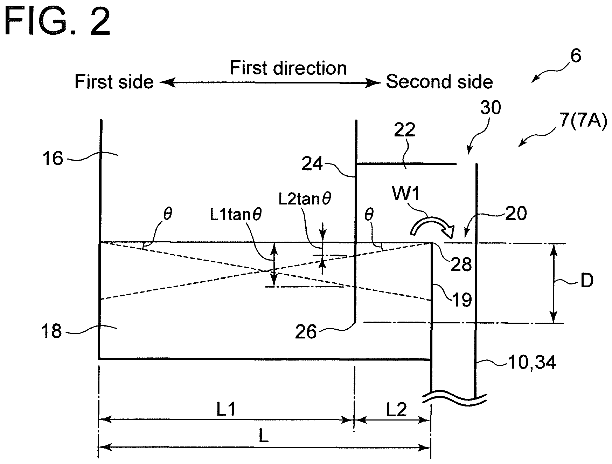

FIG. 2 is a schematic cross-sectional view for describing the dimension of a part of the desulfurization device shown in FIG. 1.

Firstly, as shown in FIG. 2, a direction in which the gas-liquid contact part 16 and the connection space part 22 are adjacent is defined as a first direction; a side adjacent to the gas-liquid contact part 16 in the first direction is defined as a first side; and a side adjacent to the connection space part 22 in the first direction is defined as a second side. Secondly, it is defined as follows: L is the length of the liquid reservoir 18 along the first direction; L1 is a length of the liquid reservoir 18 between the partition member 24 and an end of the liquid reservoir 18 on the first side in the first direction; L2 is a length of the liquid reservoir 18 between the weir part 19 and the partition member 24; and D is a difference between the height from the bottom surface of the liquid reservoir 18 to the upper end 28 of the weir part 19 and the height from the bottom surface of the liquid reservoir 18 to the lower end 26 of the partition member 24. In the embodiment shown in FIG. 2, the partition member 24 extends perpendicular to the first direction.

In some embodiments, in FIG. 2, the drainage system 7 is configured to satisfy the following expression (A). That is, the weir part 19 and the partition member 24 are configured so that the difference D is larger than the larger one of the product of the length L1 and $\tan\theta$ and the product of the length L2 and $\tan\theta$.

$$D > \max\{L1, L2\} \times \tan\theta \quad (A)$$

In the expression (A), $\theta$ is 22.5 degrees in a case where the first direction coincides with the width direction of the ship 2, and $\theta$ is 15 degrees in a case where the first direction coincides with the front-back direction of the ship 2.

A typical ship is designed in consideration of rolling (swing in the roll direction) of the ship about 22.5 degrees, and pitching (swing in the pitch direction) of the ship about 15 degrees. Thus, when the above expression (A) is satisfied, even in a case where the ship 2 rolls or pitches as expected, it is possible to suppress the flow of the gas in the gas-liquid contact part 16 passing below the partition member 24 and flowing into the connection space part 22.

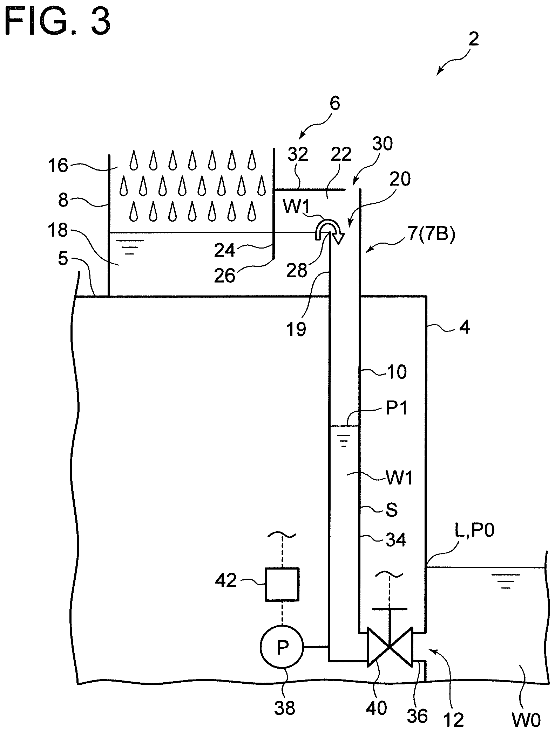

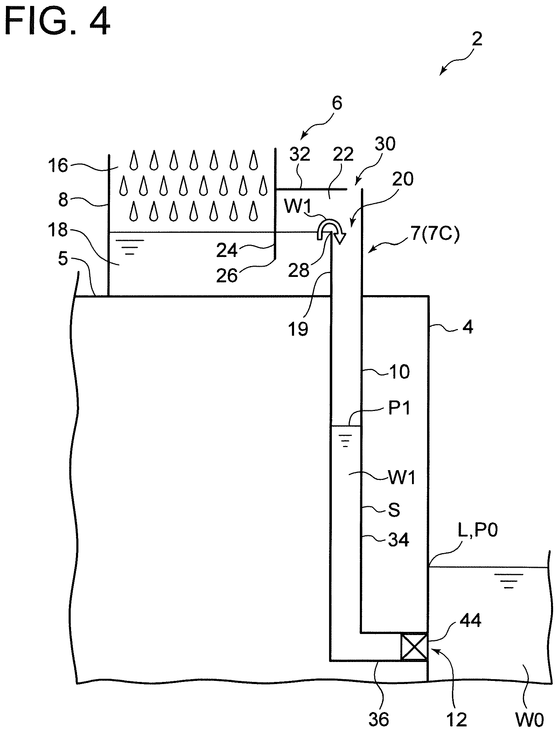

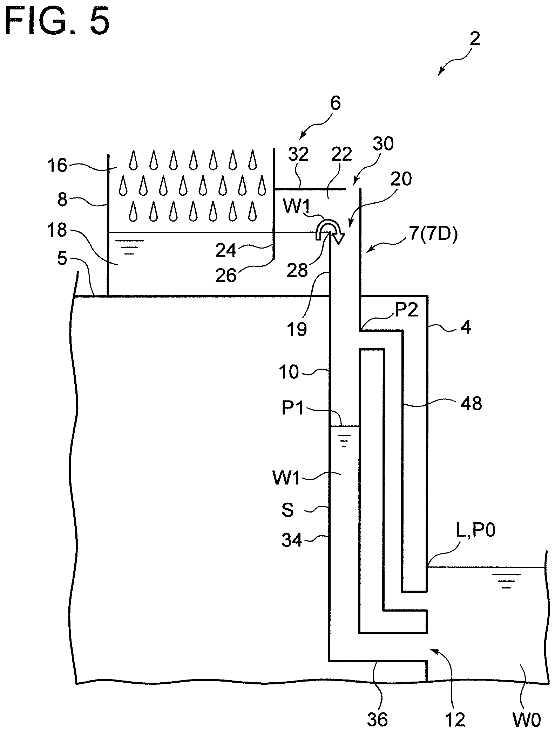

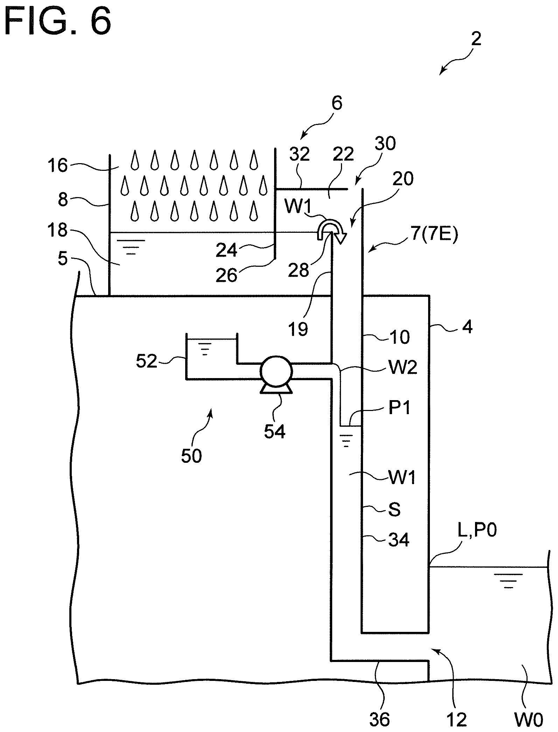

Next, some modifications of the drainage system 7 of the desulfurization device 6 will be described with reference to FIGs. 3 to 7B. FIG. 3 is a cross-sectional view showing a schematic configuration of a drainage system 7(7B) of the desulfurization device 6 according to an embodiment. FIG. 4 is a cross-sectional view showing a schematic configuration of a drainage system 7(7C) of the desulfurization device 6 according to an embodiment. FIG. 5 is a cross-sectional view showing a schematic configuration of a drainage system 7(7D) of the desulfurization device 6 according to an embodiment. FIG. 6 is a cross-sectional view showing a schematic configuration of a drainage system 7(7E) of the desulfurization device 6 according to an embodiment.

The drainage system 7(7B to 7E) of the desulfurization device 6 described below is same as the above-described drainage system 7(7A) in the basic configuration, but differs in that they further include additional components. In the following modifications, the same features as those of the drainage system 7(7A) are denoted by the same reference sings, and description thereof will be omitted. The characteristic features of each modification will be mainly described below.

In some embodiments, for instance as shown in FIG. 3, the drainage system 7(7B) includes a pressure gauge 38 as a liquid level meter for measuring the liquid level position PI of the wastewater W1 in the drainage line 10, a liquid-level-position adjustment valve 40 disposed below the waterline L on the drainage line 10, and a valve controller 42 controlling the opening degree of the liquid-level-position adjustment valve 40, based on the liquid level position PI measured by the pressure gauge 38.

With the above configuration, by controlling the opening degree of the liquid-level-position adjustment valve 40 so that the liquid level position PI of the wastewater W1 in the drainage line 10 measured by the pressure gauge 38 is kept in a predetermined range, it is possible to suppress the excess or deficiency of hydraulic head of the wastewater W1 (power of wastewater in the drainage line 10) due to load fluctuation in the head pipe 34 of the drainage line 10. Thus, it is possible to discharge the wastewater W1 from the outlet 12 appropriately with reduced damage to pipes forming the drainage line 10.

In some embodiments, for instance as shown in FIG. 4, the drainage system 7(7C) includes a nozzle 44 for mixing a liquid including the cleaning liquid discharged from the outlet 12 with water W0 (e.g., sea water, lake water, or river water) around the ship 2. As the nozzle 44, for instance, a known nozzle such as an ejector nozzle, a multi-hole nozzle, an inward annular nozzle, or a swirling nozzle can be used.

With the above configuration, using the gravity and the height difference between the liquid level position P1 of the wastewater W1 accumulated in the drainage line 10 and the height position P0 of the waterline L, it is possible to supply the wastewater W1 to the nozzle 44 by the hydraulic head of the wastewater W1 in the drainage line 10. Thereby, it is possible to effectively mix the wastewater W1 discharged from the nozzle 44 with the water W0 around the ship 2.

In some embodiments, for instance as shown in FIG. 5, the drainage system 7(7D) includes an overflow pipe 48 (emergency drainage mechanism) connecting a position P2 above the waterline of the drainage line 10 to the outside of the ship 2. In the illustrated embodiment, a first end of the overflow pipe 48 is connected to the head pipe 34 at the position P2, and a second end of the overflow pipe 48 is connected to the outside of the ship 2 at a position below the waterline L on the side surface of the ship 2.

With the above configuration, even if the flow rate of the wastewater W1 flowing into the drainage line 10 suddenly increases due to some troubles, and the liquid level position P1 of the wastewater W1 in the drainage line 10 rises, the wastewater W1 is discharged from the overflow pipe 48 to the outside of the ship 2. Thus, it is possible to suppress backflow of the wastewater W1 from the drainage line 10 to the desulfurization tower 8 and to the exhaust gas generation device (not shown).

In some embodiments, for instance as shown in FIG. 6, the drainage system 7(7E) includes a fluid injection device 50 for injecting a fluid W2 into the drainage line 10. In the illustrated embodiment, the fluid injection device 50 includes a tank 52 storing the fluid W2 and a pump 54 for supplying the fluid W2 in the tank 52 to the head pipe 34 of the drainage line 10. Further, the fluid W2 injected by the fluid injection device 50 may be a liquid such as hypochlorous acid for preventing adhesion of marine growth or an alkaline liquid (pH adjusting agent) for increasing the pH of the wastewater W1 in the drainage line 10.

With the above configuration, injecting a liquid such as hypochlorous acid into the drainage line 10 by the fluid injection device 50 prevents adhesion of marine growth to the inside of the drainage line 10. Further, injecting an alkaline liquid into the drainage line 10 by the fluid injection device 50 increases the pH of the wastewater W1 in the drainage line 10. By increasing the pH of the wastewater in the drainage line 10, in a case where wastewater having a lower pH than as intended is drained, the pH can be increased to the intended pH on the upstream side of the outlet. Alternatively, the diameter of each nozzle may be increased to reduce the number of the nozzles 44. Preferably, mixture of water and alkali, such as $NaOH$, $Ca(OH)_2$, $NaHCO_3$, $Na_2CO_3$, reduced in volume to increase concentration is used as the alkaline liquid.

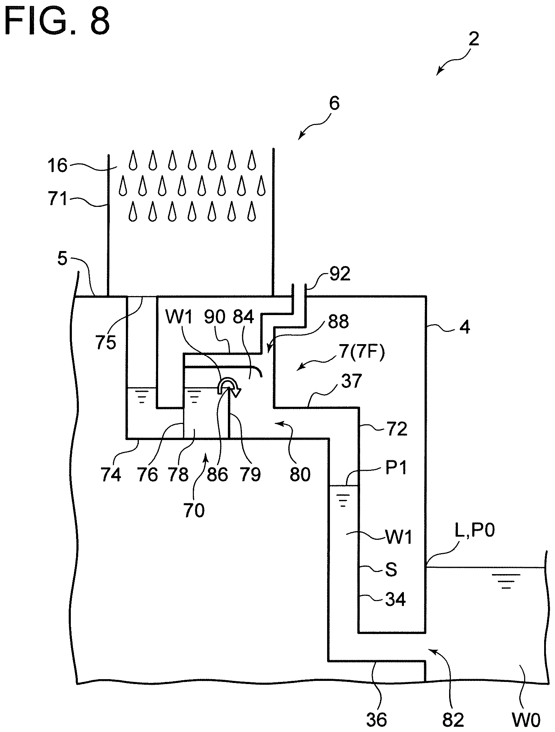

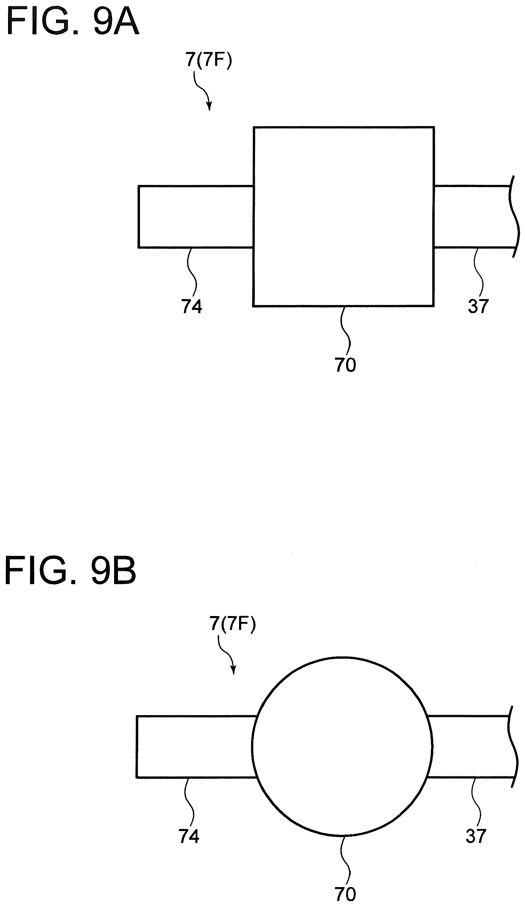

Next, the drainage system 7(7F) of the desulfurization device 6 will be described with reference to FIGs. 8 to 9B. The drainage system 7(7F) of the desulfurization device 6 differs from the drainage system 7(7A) in that it further includes a relay tank 70. FIG. 8 is a cross-sectional view showing a schematic configuration of the drainage system 7(7F) of the desulfurization device 6 according to an embodiment. FIG. 9A is a schematic diagram showing an example of a planar shape of the relay tank 70 shown in FIG. 8. FIG. 9B is a schematic diagram showing another example of a planar shape of the relay tank 70 shown in FIG. 8.

In some embodiments, for instance as shown in FIG. 8, the drainage system 7(7F) of the desulfurization device 6 includes a relay tank 70, a desulfurization tower 71, and a drainage line 72. The desulfurization tower 71 is disposed on the deck 5 of the hull 4. The desulfurization tower 71 defines therein the above-described gas-liquid contact part 16 spraying a cleaning liquid (e.g., seawater, alkaline agent) to the exhaust gas introduced into the gas-liquid contact part 16 to bring the exhaust gas and the cleaning liquid into gas-liquid contact.

The relay tank 70 is disposed outside the desulfurization tower 71 and defines therein a liquid reservoir 78 for receiving a liquid including the cleaning liquid which absorbs sulfur contents in the exhaust gas at the gas-liquid contact part 16. That is, while in the drainage systems 7A to 7E, a liquid including the cleaning liquid is stored in the liquid reservoir 18 defined in the desulfurization tower 8, in the drainage system 7F, a liquid including the cleaning liquid is stored in the liquid reservoir 78 defined in the relay tank 70.

In the illustrated embodiment, the relay tank 70 is disposed inside the hull 4. Further, the drainage system 7(7F) includes a relay pipe 74 with a first end 75 connected to the desulfurization tower 71 at a position below the gas-liquid contact part 16 and a second end 76 connected to the relay tank 70 at a position below the first end 75. The relay pipe 74 is configured so that a liquid including the cleaning liquid which absorbs sulfur contents in the exhaust gas at the gas-liquid contact part 16 flows therethrough from the desulfurization tower 71 to the liquid reservoir 78 of the relay tank 70.

The drainage line includes an inlet 80 and an outlet 82.

The inlet 80 is disposed above the waterline L of the ship 2 and is configured so that a liquid stored in the liquid reservoir 78 flows into the inlet 80 as wastewater W1, for instance, as shown in FIG. 8. In the illustrated embodiment, a weir part 79 is disposed on the liquid reservoir 78, and an upper end 86 of the weir part 79 is positioned above the waterline L. Further, when the liquid level (liquid surface height) of the liquid reservoir 78 exceeds the upper end 86 of the weir part 79, a liquid stored in the liquid reservoir 78 overflows the weir part 79 and flows into the inlet 80 as wastewater W1.

The outlet 82 is disposed below the waterline L and is configured to discharge the wastewater W1 flowing from the inlet 80 to the outside of the ship 2. Further, when the wastewater W1 is accumulated in the drainage line 72 and reaches a liquid level position P1 above the waterline L, the drainage line 72 includes a section S (pipe) that is not open to the atmosphere over a range between the outlet 82 and the liquid level position PI of the wastewater W1 in the drainage line 72. That is, in the section S, the drainage line 72 is not connected to a facility, such as a wastewater treatment tank, that is open to the atmosphere.

In the exemplary embodiment shown in FIG. 8, the drainage line 72 includes the above-described head pipe 34 extending along the vertical direction and having a height (head) between an upper end portion and a lower end portion, the above-described horizontal pipe 36 extending along the horizontal direction from the lower end portion of the head pipe 34, and a second horizontal pipe 37 extending along the horizontal direction from the upper end portion of the head pipe 34 and having an end connected to the relay tank 70. The second horizontal pipe 37 is connected to a side surface of the relay tank 70 at a position below the upper end 86 of the weir part 79. The inlet 80 is disposed on the front end of the second horizontal pipe 37 (side surface of the relay tank 70), and the outlet 82 is disposed on the rear end of the horizontal pipe 36 (side surface of the hull 4).

In other embodiments, the upper end portion of the head pipe 34 may be connected to the bottom surface of the relay tank 70. That is, the drainage line 72 includes the head pipe 34 and the horizontal pipe 36. The inlet 80 is disposed at the upper end of the head pipe 34 (bottom surface of the relay tank 70), and the outlet 82 is disposed on the rear end of the horizontal pipe 36 (side surface of the hull 4).

With the above configuration, a liquid can be stored in the liquid reservoir 78 of the relay tank 70 disposed outside the desulfurization tower 71. Further, since the liquid reservoir 78 is provided in the relay tank 70 which is positioned outside the desulfurization tower 71 and can be changed in layout more easily than the desulfurization tower 71, it is possible to improve the layout of the desulfurization tower 71, compared with a case where the liquid reservoir 18 is provided in the desulfurization tower 8 (see FIGs. 1 to 7B).

In particular, in a case where the relay tank 70 is disposed inside the hull 4, it is possible to make use of a space above the deck 5 of the hull 4. Further, since the relay tank 70 can be disposed in an empty space inside the hull 4, it is possible to make use of the interior of the hull 4.

Further, with the above configuration, as well as the drainage system 7A, using the gravity and the height difference between the liquid level position PI of the wastewater W1 accumulated in the drainage line 72 and the height position P0 of the waterline L, it is possible to supply the wastewater W1 to the outlet 82 by the hydraulic head of the wastewater W1 in the drainage line 72. Further, since the wastewater W1 flows into the inlet 80 from the liquid reservoir 78 by the overflow method as described above, a liquid stored in the liquid reservoir 78 and a liquid accumulated in the drainage line 72 are separated spatially, and the amount of the liquid stored in the liquid reservoir 78 does not directly affect the pressure of the liquid in the drainage line 72. Thus, it is possible to suppress the increase in pressure applied to pipes forming the drainage line 72.

Further, in the illustrated embodiment, since the drainage line 72 is not provided with a valve above the waterline L, the above problems raised in the configuration shown in FIG. 11 (damage to pipes or boiling of internal fluid under reduced pressure due to negative pressure occurring downstream of the valve) do not occur, and thus it is possible to reduce damage to pipes of the drainage line 72. Accordingly, it is possible to decrease the design strength of pipes forming the drainage line 72, and it is possible to reduce the cost and the weight of pipes.

In some embodiments, for instance as shown in FIG. 8, the relay tank 70 defines therein a connection space part 84 connected to the drainage line 72. Further, the weir part 79 is disposed on the connection space part 84.

With the above configuration, since the connection space part 84 connected to the drainage line 72 is provided in the relay tank 70 which is positioned outside the desulfurization tower 71 and can be changed in layout more easily than the desulfurization tower 71, it is possible to improve the layout of the desulfurization tower 71 and the drainage line 72.

In some embodiments, for instance as shown in FIG. 8, the second end 76 of the relay pipe 74 is positioned below the upper end 86 of the weir part 79.

With the above configuration, since the second end 76 of the relay pipe 74 is positioned below the upper end 86 of the weir part 79, a liquid can be stored to a position above the second end 76 of the relay pipe 74 in the liquid reservoir 78. Thereby, it is possible to suppress inflow of the gas in the gas-liquid contact part 16 of the desulfurization tower 71 into the connection space part 84 by the liquid stored in the liquid reservoir 78. Consequently, it is possible to suppress inflow of the gas in the gas-liquid contact part 16 of the desulfurization tower 71 into the drainage line 72, and it is possible to reduce damage to pipes forming the drainage line 72.

In some embodiments, for instance as shown in FIG. 8, the relay tank 70 is provided with an atmospheric opening 88 connecting the connection space part 84 to the atmosphere. In the illustrated exemplary embodiment, the atmospheric opening 88 is formed in a ceiling part 90 which defines the connection space part 84 of the relay tank 70. Further, in the illustrated exemplary embodiment, an atmospheric opening pipe 92 having a first end connected to the atmospheric opening 88 and a second end disposed outside the hull 4 is provided.

With the above configuration, the pressure in the connection space part 84 is kept at atmospheric pressure through the atmospheric opening 88, which makes it possible to avoid the occurrence of a phenomenon that a liquid stored in the liquid reservoir 78 of the relay tank 70 is sucked out to the drainage line 72 by the siphon effect. Further, since the connection space part 84 and the gas-liquid contact part 16 are separated by the liquid stored in the liquid reservoir 78, it is possible to prevent the gas in the gas-liquid contact part 16 from flowing out to the atmosphere through the atmospheric opening 88.

In some embodiments, as shown in FIG 9A, the planar shape of the relay tank 70 is rectangular. Alternatively, in some embodiments, as shown in FIG 9B, the planar shape of the relay tank 70 is circular. Further, in some embodiments, the planar shape of the relay tank 70 is elliptical or rounded rectangular. That is, the planar shape of the relay tank 70 may be determined in accordance with the layout inside the hull 4 at the time of designing.

Further, in some embodiments, the drainage system 7F of the desulfurization device 6 includes additional components included in the drainage systems 7B to 7E. With the above configuration, the drainage system 7F of the desulfurization device 6 achieves effects attributable to the additional components included in the drainage systems 7B to 7E.

The present invention is not limited to the embodiments described above, but includes amendments and modifications to the embodiments described above, and embodiments composed of combinations of those embodiments.

For instance, in some embodiments, in the drainage system 7(7A to 7F) of the desulfurization device 6, a material having acid resistance such as fiber reinforced plastic (FRP) and Hastelloy may be used as the material of the pipes (head pipe 34, horizontal pipe 36, and second horizontal pipe 37) of the drainage line 10, 72 or the relay pipe 74. An acid resistant treatment such as rubber lining may be applied to the inner peripheral surfaces of the pipes (head pipe 34, horizontal pipe 36, and second horizontal pipe 37) of the drainage line 10, 72 or the relay pipe 74. Thereby, it is possible to elongate the lifetime of pipes forming the drainage line 10, 72.

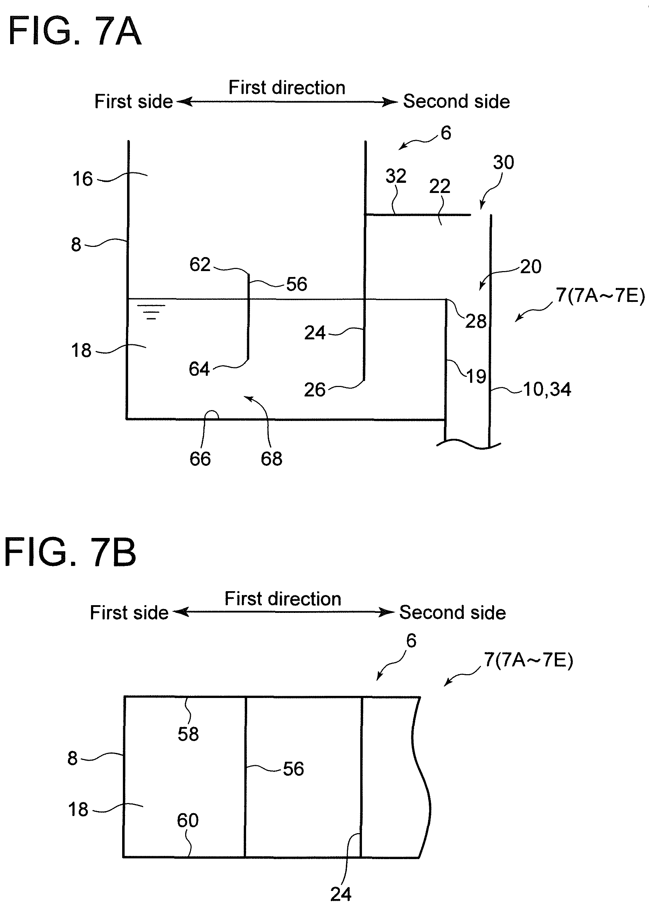

Further, for instance, the drainage system 7(7A to 7F) of the desulfurization device 6 may further includes a traverse member 56 described below. FIG. 7A is a schematic cross-sectional view for describing the configuration of the traverse member 56. FIG. 7B is a schematic diagram for describing the arrangement of the traverse member 56 in plan view.

In some embodiments, for instance as shown in at least one of FIG. 7A and FIG. 7B, the desulfurization tower 8 includes a traverse member 56 connecting an opposed pair of wall surfaces 58, 60 of the desulfurization tower 8 and traversing the liquid reservoir 18.

With the above configuration, it is possible to suppress sloshing in a direction intersecting with the extension direction of the traverse member 56 in the liquid reservoir 18 by the traverse member 56. The provision of the traverse member 56 allows the change of natural frequency of liquid in the reservoir, and the selection of natural frequency different from the frequency of the ship 2 prevents sloshing (i.e., oscillation of liquid surface). The sloshing suppression effect by the traverse member 56 can be obtained regardless of the configuration of the drainage line 10.

In some embodiments, for instance as shown in FIG. 7B, the traverse member 56 extends along the extension direction of the partition member 24.

With the above configuration, it is possible to effectively suppress sloshing in a direction perpendicular to the extension direction of the partition member 24 by the traverse member 56. Thus, it is possible to suppress the flow of the gas in the gas-liquid contact part 16 passing below the partition member 24 and flowing into the connection space part 22.

In some embodiments, for instance as shown in at least one of FIG. 7A and FIG. 7B, the traverse member 56 has a planar shape, an upper end 62 of the traverse member 56 is positioned above the upper end 28 of the weir part 19, and a lower end 64 of the traverse member 56 is positioned below the upper end 28 of the weir part 19. Further, a clearance 68 is provided between the lower end 64 of the traverse member 56 and a bottom surface 66 of the desulfurization tower 8.

With the above configuration, it is possible to effectively suppress sloshing in a direction intersecting with the extension direction of the traverse member 56 in the liquid reservoir 18 by the traverse member 56 while the liquid level on both sides of the traverse member 56 in the liquid reservoir 18 is made uniform.

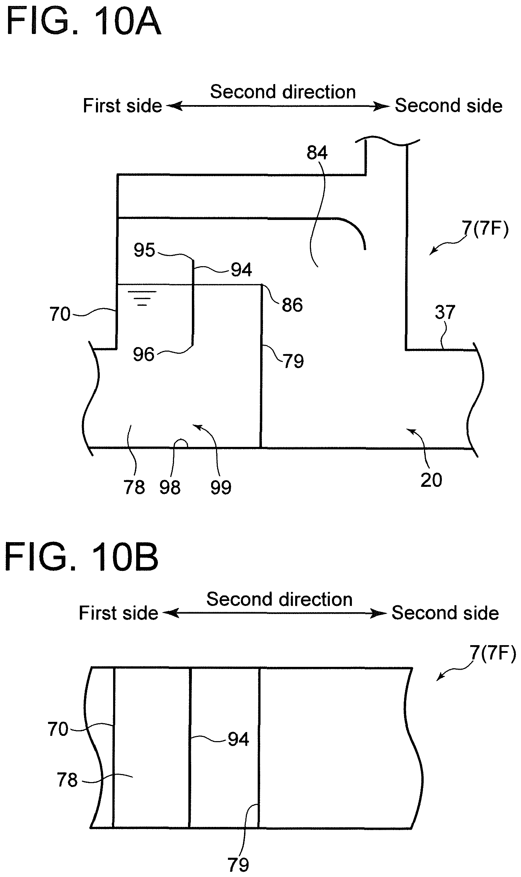

Further, for instance, the drainage system 7(7F) of the desulfurization device 6 may further includes a traverse member 94 described below. FIG. 10A is a schematic cross-sectional view for describing the configuration of the traverse member 94. FIG. 10B is a schematic diagram for describing the arrangement of the traverse member 94 in plan view. First, as shown in FIG. 10A, a direction in which the liquid reservoir 78 and the connection space part 84 are adjacent is defined as a second direction.

In some embodiments, for instance as shown in at least one of FIG. 10A and FIG. 10B, the relay tank 70 includes a traverse member 94 traversing the liquid reservoir 78. Both ends of the traverse member 94 are connected to the wall surface of the relay tank 70.

With the above configuration, it is possible to suppress sloshing in a direction intersecting with the extension direction of the traverse member 94 in the liquid reservoir 78 by the traverse member 94. The provision of the traverse member 94 allows the change of natural frequency of liquid in the reservoir, and the selection of natural frequency different from the frequency of the ship 2 prevents sloshing (i.e., oscillation of liquid surface). The sloshing suppression effect by the traverse member 94 can be obtained regardless of the configuration of the drainage line 72.

In some embodiments, for instance as shown in FIG. 10B, the traverse member 94 extends along the extension direction of the weir part 79 (direction perpendicular to the second direction).

With the above configuration, it is possible to effectively suppress sloshing in a direction perpendicular to the extension direction of the weir part 79 by the traverse member 94.

In some embodiments, for instance as shown in at least one of FIG. 10A and FIG. 10B, the traverse member 94 has a planar shape, an upper end 95 of the traverse member 94 is positioned above the upper end 86 of the weir part 79, and a lower end 96 of the traverse member 94 is positioned below the upper end 86 of the weir part 79. Further, a clearance 99 is provided between the lower end 96 of the traverse member 94 and a bottom surface 98 of the relay tank 70.

With the above configuration, it is possible to effectively suppress sloshing in a direction intersecting with the extension direction of the traverse member 94 in the liquid reservoir 78 by the traverse member 94 while the liquid level on both sides of the traverse member 94 in the liquid reservoir 78 is made uniform.

Further, while the above embodiments have been described in conjunction with a case where the pressure gauge 38 is used as the liquid level meter for measuring the liquid level position PI of the wastewater W1 in the drainage line 10, the liquid level meter is not limited to a water pressure type. Any liquid level gauge of a known type such as ultrasonic type, radio type, float type, optical type can be used as the liquid level meter.

Reference Signs List

| | |
|---|---|
| 2 | Ship |
| 4 | Hull |
| 5 | Deck |
| 6 | Desulfurization device |
| 7 (7A to 7F) | Drainage system |
| 8, 71 | Desulfurization tower |
| 10, 72 | Drainage line |
| 12, 82 | Outlet |
| 16 | Gas-liquid contact part |
| 18, 78 | Liquid reservoir |
| 19, 79 | Weir part |
| 20, 80 | Inlet |
| 22, 84 | Connection space part |
| 24 | Partition member |
| 26, 64, 96 | Lower end |
| 28, 62, 86, 95 | Upper end |
| 30, 88 | Atmospheric opening |
| 32, 90 | Ceiling part |
| 34 | Head pipe |
| 36 | Horizontal pipe |
| 37 | Second horizontal pipe |
| 38 | Pressure gauge |
| 40 | Liquid-level-position adjustment valve |
| 42 | Valve controller |
| 44 | Nozzle |
| 48 | Overflow pipe |
| 50 | Fluid injection device |
| 52 | Tank |
| 54 | Pump |
| 56, 94 | Traverse member |
| 58, 60 | Wall surface |
| 66, 98 | Bottom surface |
| 68, 99 | Clearance |
| 70 | Relay tank |
| 74 | Relay pipe |
| 75 | First end |
| 76 | Second end |
| 92 | Atmospheric opening pipe |

**Claims**

1. A drainage system for a marine desulfurization device for desulfurizing an exhaust gas discharged from an exhaust gas generation device mounted on a ship, the drainage system comprising:

   a desulfurization tower defining therein a gas-liquid contact part spraying a cleaning liquid to the exhaust gas introduced into the gas-liquid contact part to bring the exhaust gas and the cleaning liquid into gas-liquid contact; and
   a drainage line having an inlet and an outlet, the inlet being positioned above a waterline of the ship and being configured so that a liquid stored in a liquid reservoir and including the cleaning liquid sprayed to the exhaust gas flows into the inlet as wastewater, the outlet being positioned below the waterline and discharging the liquid flowing from the inlet to an outside of the ship, wherein the drainage system is configured so that the liquid that is stored in the liquid reservoir and exceeds a height of a weir part disposed above the waterline overflows the weir part and flows into the inlet.

2. The drainage system for a marine desulfurization device according to claim 1,
   wherein the desulfurization tower further defines therein the liquid reservoir positioned below the gas-liquid contact part.

3. The drainage system for a marine desulfurization device according to claim 2,
   wherein the desulfurization tower further defines therein a connection space part connected to the drainage line, the weir part is disposed on the connection space part, and the desulfurization tower includes a partition member separating the connection space part from the gas-liquid contact part, and
   wherein a lower end of the partition member is positioned below an upper end of the weir part.

4. The drainage system for a marine desulfurization device according to claim 3,
   wherein the desulfurization tower is provided with an atmospheric opening connecting the connection space part to atmosphere.

5. The drainage system for a marine desulfurization device according to claim 3 or 4,
   wherein the desulfurization tower includes a traverse member connecting an opposed pair of wall surfaces of the desulfurization tower and traversing the liquid reservoir.

6. The drainage system for a marine desulfurization device according to claim 5,
wherein the traverse member extends along an extension direction of the partition member.

7. The drainage system for a marine desulfurization device according to claim 6,
wherein an upper end of the traverse member is positioned above the upper end of the weir part,
wherein a lower end of the traverse member is positioned below the upper end of the weir part, and
wherein a clearance is provided between the lower end of the traverse member and a bottom surface of the desulfurization tower.

8. The drainage system for a marine desulfurization device according to any one of claims 3 to 7,
wherein when

a direction in which the gas-liquid contact part and the connection space part are adjacent is defined as a first direction;
a side adjacent to the gas-liquid contact part in the first direction is defined as a first side;
a side adjacent to the connection space part in the first direction is defined as a second side;
L is a length of the liquid reservoir along the first direction;
L1 is a length of the liquid reservoir between the partition member and an end of the liquid reservoir on the first side in the first direction;
L2 is a length of the liquid reservoir between the partition member and the weir part; and
D is a difference between a height of the weir part and a height of a lower end of the partition member,

the following expression (A) is satisfied:

$$D > \max\{L1, L2\} \times \tan\theta \qquad (A)$$

wherein $\theta$ is 22.5 degrees in a case where the first direction coincides with a width direction of the ship, and 0 is 15 degrees in a case where the first direction coincides with a front-back direction of the ship.

9. The drainage system for a marine desulfurization device according to claim 1, further comprising a relay tank disposed outside the desulfurization tower and defining therein the liquid reservoir.

10. The drainage system for a marine desulfurization device according to claim 9,
wherein the relay tank further defines therein a connection space part connected to the drainage line, and the weir part is disposed on the connection space part.

11. The drainage system for a marine desulfurization device according to claim 10,
wherein the relay tank is provided with an atmospheric opening connecting the connection space part to atmosphere.

12. The drainage system for a marine desulfurization device according to any one of claims 1 to 11, further comprising:

a liquid level meter for measuring a liquid level position of the wastewater in the drainage line;
a liquid-level-position adjustment valve disposed below the waterline in the drainage line; and
a valve controller controlling an opening degree of the liquid-level-position adjustment valve, based on the liquid level position measured by the liquid level meter.

13. The drainage system for a marine desulfurization device according to any one of claims 1 to 12, further comprising a nozzle for mixing the liquid including the cleaning liquid discharged from the outlet with water around the ship.

14. The drainage system for a marine desulfurization device according to any one of claims 1 to 13, further comprising an overflow pipe connecting a predetermined position of the drainage line above the waterline to the outside of the ship.

15. The drainage system for a marine desulfurization device according to any one of claims 1 to 14, further comprising a fluid injection device for injecting a fluid into the drainage line.

# FIG. 1

# FIG. 2

# FIG. 3

# FIG. 4

# FIG. 5

# FIG. 6

# FIG. 7A

First side ←――― First direction ―――→ Second side

# FIG. 7B

First side ←――― First direction ―――→ Second side

# FIG. 8

# FIG. 9A

7(7F)

74

70

37

# FIG. 9B

7(7F)

74

70

37

# FIG. 10A

Second direction

First side ◄——————————► Second side

84

7(7F)

95

94

86

70

96

79

37

78  98  99

20

# FIG. 10B

Second direction

First side ◄——————————► Second side

7(7F)

70

94

78

79

# FIG. 11

**INTERNATIONAL SEARCH REPORT**

| International application No. |
| --- |
| PCT/JP2018/011925 |

**A. CLASSIFICATION OF SUBJECT MATTER**
Int.Cl. B63H21/32(2006.01)i, B63H21/14(2006.01)i

According to International Patent Classification (IPC) or to both national classification and IPC

**B. FIELDS SEARCHED**

Minimum documentation searched (classification system followed by classification symbols)
Int.Cl. B63H21/32, B63H21/14

| Documentation searched other than minimum documentation to the extent that such documents are included in the fields searched | |
| --- | --- |
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y<br>A | JP 9-239233 A (MITSUBISHI HEAVY INDUSTRIES, LTD.) 16 September 1997, paragraphs [0016]-[0029], fig. 2-5 (Family: none) | 1-7, 9-13, 15<br>8, 14 |
| Y<br>A | CN 201058282 Y (YANG, Dong) 14 May 2008, specification, page 2, line 28 to page 4, line 14, fig. 1 (Family: none) | 1-7, 9-13, 15<br>8, 14 |

☒ Further documents are listed in the continuation of Box C.   ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 30 May 2018 (30.05.2018) | 12 June 2018 (12.06.2018) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
| --- | --- |

Form PCT/ISA/210 (second sheet) (January 2015)

**INTERNATIONAL SEARCH REPORT**

| International application No. |
|---|
| PCT/JP2018/011925 |

C (Continuation).   DOCUMENTS CONSIDERED TO BE RELEVANT

| Category* | Citation of document, with indication, where appropriate, of the relevant passages | Relevant to claim No. |
|---|---|---|
| Y<br>A | JP 2012-245972 A (FUKUSHIMA LTD.) 13 December 2012,<br>paragraphs [0052], [0055], fig. 10-11 (Family: none) | 13, 15<br>8, 14 |
| A | US 6200179 B1 (ECO SOUND INC.) 13 May 2001 (Family: none) | 1-15 |
| A | JP 7-8748 A (BABCOCK HITACHI KK) 13 January 1995 (Family:<br>none) | 1-15 |
| A | JP 5-28421 U (MITSUBISHI HEAVY INDUSTRIES, LTD.) 16 April<br>1993 (Family: none) | 1-15 |
| A | JP 5-4024 A (CHUBU ELECTRIC POWER CO., INC.) 14 January 1993<br>(Family: none) | 1-15 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011524800A PCT